# FASCICULE DE BREVET EUROPEEN

(11) **EP 4 445 005 B1**
(45) Date de publication et mention de la délivrance du brevet: **08.10.2025**
(21) Numéro de dépôt: 22835093.0
(22) Date de dépôt: 04.12.2022
(51) Int. Cl.: F02C 7/22

(54) **ENSEMBLE DE DISTRIBUTION DE CARBURANT POUR TURBOMACHINE**
BRENNSTOFFVERTEILUNGSANORDNUNG FÜR EINE TURBOMASCHINE
FUEL DISTRIBUTION ASSEMBLY FOR A TURBOMACHINE

(30) Priorité: 09.12.2021 FR 2113214
(43) Date de publication de la demande: 16.10.2024
(73) Titulaire: SAFRAN AIRCRAFT ENGINES, 75015 Paris (FR)
(72) Inventeur: LOVAL, Sébastien Christophe, 77550 MOISSY-CRAMAYEL (FR); METGE, Pierre Jean-Baptiste, 77550 MOISSY-CRAMAYEL (FR); CORSAUT, Alexandre, 77550 MOISSY-CRAMAYEL (FR); AUBER, Kevin, 77550 MOISSY-CRAMAYEL (FR); SERRAU, Marc, 77550 MOISSY-CRAMAYEL (FR); JAHIN, Sébastien, 77550 MOISSY-CRAMAYEL (FR)
(74) Mandataire: Ernest Gutmann - Yves Plasseraud S.A.S.
(86) Numéro de dépôt international: PCT/FR2022/052240
(87) Numéro de publication internationale: WO 2023/105146

(56) Documents cités:
- FR-A1- 2 832 760
- US-A1- 2018 087 701
- US-A1- 2020 095 937
- US-B2- 10 513 983

## Description

### Domaine technique de l'invention

L'invention concerne un ensemble de distribution de carburant pour turbomachine.

### Etat de la technique antérieure

L'alimentation d'une turbomachine en carburant, par exemple du kérosène, nécessite une répartition de ce carburant entre un grand nombre d'entrée et de sorties, pour alimenter les multiples buses de la chambre de combustion.

Pour ce faire, une turbomachine comprend un ensemble de distribution, comprenant une pluralité de conduits de distribution de carburants, afin d'assurer cette alimentation complexe. Les systèmes d'alimentation précédents, comprenant des assemblages de tubes d'alimentation distincts, obtenus par usinage ou par fonderie de type cire perdue, manquent de compacité et sont très complexes et couteux à fabriquer.

Les systèmes existants prennent la forme d'une plaque compacte intercalée entre des connecteurs d'alimentation et le bloc moteur, réalisée par superposition de plaques usinées puis assemblées entre elles par soudage diffusion.

La figure 1 est une vue éclatée d'un tel ensemble de distribution 1, comprenant six plaques 3 métalliques usinées, superposées selon une direction d'empilement X, et fixées les unes aux autres par soudage diffusion. Des organes de serrage sont ajoutés dans des orifices 5 traversant l'empilement, pour améliorer le maintien.

Des conduits 7 sont définis par des évidements allongés dans une des plaques 3 et les bords d'empilement des deux plaques 3 voisines.

La figure 2 est une vue en coupe de cet ensemble de distribution 1, qui montre la section interne des conduits 7 obtenus avec ce mode de fabrication, ladite section présentant une forme sensiblement rectangulaire.

Une telle section rectangulaire n'est pas optimale pour l'écoulement des liquides, car les coins du rectangle constituent des zones de faibles vitesses, qui ne contribuent que peu au débit global. Il est de plus possible que les conduits 7 se déforment au cours de l'assemblage des plaques 3. La pression d'assemblage exercée dans la direction d'empilement X provoque un bombement des faces supérieures et inférieures 9 des conduits 7, ce qui leur confère une forme légèrement convexe encore moins efficace fluidiquement qu'un rectangle simple.

En outre, les coudes des conduits 7 dans la direction d'empilement X sont des coudes à 90°, obtenus en alignant un perçage avec un conduit 7 d'une plaque 3 voisine. Ces coudes provoquent des pertes de charge importantes.

Enfin, l'ensemble de distribution 1 obtenu est massif et pesant, et sa fabrication est coûteuse à cause du grand nombre d'opérations nécessaires.

Des exemples d'ensembles de distribution de carburant sont décrits dans les documents US 2020/095937 A1, US 2018/087701 A1 et US 10513983 B2.

### Présentation de l'invention

L'invention vise à remédier à ces inconvénients, en fournissant un ensemble de distribution de carburant léger et simple de fabrication, et dans lequel l'écoulement du carburant est facilité. A cet effet, l'invention a pour objet un ensemble de distribution de carburant pour turbomachine selon la revendication 1.

L'ensemble de distribution de carburant selon l'invention peut présenter une ou plusieurs des caractéristiques des revendications 2 à 8.

Un tel ensemble de distribution permet d'avoir un diamètre hydraulique efficace de chaque conduit augmenté, sans changement de l'aire de la section. L'ensemble de distribution est fabriqué selon un procédé par fabrication additive. En effet, le procédé de fabrication additive rend possible l'obtention d'une telle géométrie. L'ensemble de distribution présente également une masse réduite, et peut être fabriqué de manière simple, fiable et peu couteuse grâce à la fabrication additive.

La portion médiane des conduits peut également présenter une section externe elliptique.

La section interne et la section externe sont prises dans un plan de section perpendiculaire à une direction d'extension locale du conduit.

L'ellipse de la section interne et/ou de la section externe de la portion médiane de chaque conduit est notamment non-circulaire, c'est-à-dire qu'elle présente une excentricité non-nulle. L'ensemble de distribution comprend une plaque de support reliant les portions médianes des conduits entre elles, la plaque de support s'étendant selon un plan médian sensiblement parallèle au premier plan d'interface et au deuxième plan d'interface.

Une telle caractéristique permet le maintien des conduits pendant la fabrication de l'ensemble de distribution par fabrication additive, et améliore la résistance de l'ensemble aux vibrations lors du fonctionnement de la turbomachine.

Le plan médian peut être équidistant du premier plan d'interface et du deuxième plan d'interface.

Une telle caractéristique améliore la stabilité et la résistance aux vibrations de l'ensemble de distribution.

La plaque de support peut présenter une épaisseur, mesurée perpendiculairement au plan médian, comprise entre 1 mm et 2 mm.

Une telle caractéristique permet un bon compromis entre la résistance mécanique de l'ensemble de distribution et sa masse.

L'ensemble de distribution peut comprendre au moins une nervure de rigidification s'étendant sur la plaque de support, en saillie depuis la plaque de support selon une direction perpendiculaire au plan médian.

De telles nervures améliorent la résistance de la plaque, notamment en flexion dans le plan médian.

L'ensemble de distribution peut comprendre au moins une portion d'encastrement s'étendant en saillie depuis la plaque de support jusqu'au premier plan d'interface, chaque portion d'encastrement comprenant au moins une surface périphérique formant un angle de dépouille avec le premier plan d'interface, dans un plan de section perpendiculaire audit premier plan d'interface, l'angle de dépouille étant compris entre 30° et 60°.

Une telle caractéristique facilite la mise en place et le centrage de l'ensemble de distribution, ainsi que son démontage et retrait.

La portion d'entrée et/ou la portion de sortie de chaque conduit peut présenter une section interne présentant une forme de goutte d'eau.

Une telle caractéristique permet d'éviter une perte de charge au niveau des entrées et/ou des sorties due au changement de section brutal, sans dépasser d'une région d'appui des joints d'étanchéité à l'interface.

Par forme de goutte d'eau, il est entendu une forme composée de la superposition d'un cercle et d'un triangle dont deux côtés sont tangents au cercle, le sommet formé par lesdits deux côtés étant arrondi.

La pluralité de conduits peut comprendre entre huit et douze conduits.

L'invention concerne également un procédé de fabrication d'un ensemble de distribution selon la revendication 8.

Un tel procédé permet de fabriquer l'ensemble de manière rapide et fiable, et permet d'obtenir un ensemble de distribution présentant l'une ou plusieurs des caractéristiques précitées.

Au cours de la fabrication de l'ensemble de distribution, le plan médian peut être orienté verticalement dans une cuve contenant la poudre métallique, de sortie que la plaque de support joue un rôle de support pour les conduits pendant la fabrication.

### Brève description des figures

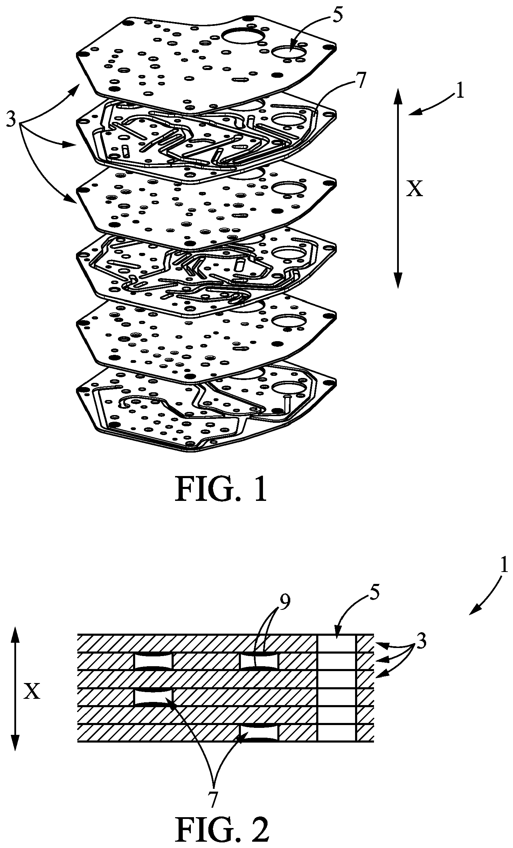

[Fig. 1] la figure 1 est une vue éclatée d'un ensemble de distribution de carburant connu de l'état de la technique,
[Fig. 2] la figure 2 est une vue en coupe transversale de l'ensemble de distribution de la figure 1,

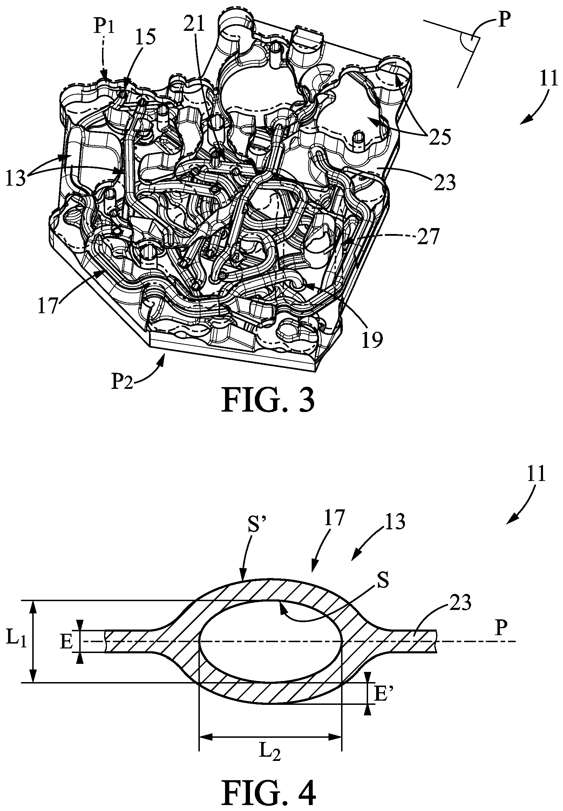

[Fig. 3] la figure 3 est une vue en perspective d'un ensemble de distribution selon l'invention,
[Fig. 4] la figure 4 est une vue en coupe transversale d'une portion médiane d'un conduit de l'ensemble de la figure 3,

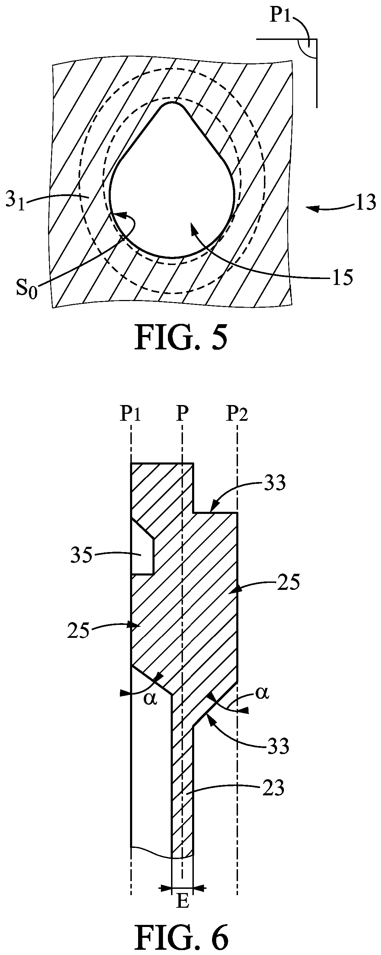

[Fig. 5] la figure 5 est une vue en coupe transversale d'une portion d'entrée du conduit de la figure 4, et
[Fig. 6] La figure 6 est une vue en coupe longitudinale d'une portion d'encastrement de l'ensemble de la figure 3.

### Description détaillée de l'invention

Un ensemble de distribution 11 selon l'invention est représenté sur la figure 3. L'ensemble 11 est réalisé d'une seule pièce, tous ses composants métalliques étant venus de matière les uns avec les autres.

L'ensemble 11 s'étend entre un premier plan d'interface P1 et un deuxième plan d'interface P2, parallèles l'un à l'autre. Le premier plan d'interface P1 et le deuxième plan d'interface P2 comprennent les surfaces de contact mécanique et fluidique de l'ensemble 11 avec les autres éléments de la turbomachine entre lesquels l'ensemble 11 répartit le carburant.

L'ensemble 11 comprend une pluralité de conduits 13 de distribution de carburant cheminant entre le premier plan d'interface P1 et le deuxième plan d'interface P2.

Chaque conduit 13 comprend au moins une portion d'entrée 15, une portion médiane 17 et au moins une portion de sortie 19.

Dans le cas où le conduit 13 comprend plusieurs portions d'entrée 15 ou plusieurs portions de sortie 19, le conduit 13 comprend également au moins un embranchement 21, par exemple un embranchement en T.

Chaque portion d'entrée 15 et chaque portion de sortie 19 débouche dans le premier plan d'interface P1 ou dans le deuxième plan d'interface P2.

La portion d'entrée 15 et la portion de sortie 19 de chaque conduit 13 peuvent déboucher dans le même plan d'interface P1, P2, ou dans des plans d'interface P1, P2, distincts l'une de l'autre, selon les besoins de la distribution de carburant.

La partie médiane 17 s'étend entre chaque portion d'entrée 15 et chaque portion de sortie 19. L'ensemble de distribution 11 comprend une plaque de support 23 reliant entre elles les portions médianes 17 des conduits, ainsi que des portions d'encastrement 25 et des nervures de rigidification 27 portées par la plaque de support 23.

La plaque de support 23 est sensiblement plane et s'étend selon un plan médian P. Le plan médian P est par exemple parallèle aux premier et deuxième plans d'interface P1, P2, et par exemple équidistant des premier et deuxième plans d'interface P1, P2.

Les portions 25 d'encastrement sont des parties en saillie s'étendant depuis la plaque de support 23, selon une direction perpendiculaire au plan médian P, jusqu'au premier plan d'interface P1 ou au deuxième plan d'interface P2.

Chaque portion d'encastrement 25 présente un sommet plan inscrit dans le premier plan d'interface P1 ou le deuxième plan d'interface P2, et ne dépasse pas dudit plan d'interface.

Les parties d'encastrement 25 sont destinées à venir en appui, dans le premier plan d'interface P1 ou le deuxième plan d'interface P2, contre les éléments de la turbomachine auxquels l'ensemble de distribution 11 est fixé, et à s'encastrer dans des logements prévus à cet effet, pour bloquer les mouvements de l'ensemble de distribution 11 selon les directions parallèles aux premier plan d'interface P1 ou au deuxième plan d'interface 2, respectivement.

Les nervures de rigidification 27 sont des parties allongées le long de la plaque de support 23, en saillie depuis ladite plaque de support 23 selon une direction perpendiculaire au plan médian P.

Les nervures de rigidification 27 sont par exemple sensiblement rectilignes parallèlement plan médian P, ou bien présentent une courbure parallèlement au plan médian P.

Les nervures de rigidification 27 augmentent la rigidité en flexion de l'ensemble de distribution 11 et améliorent sa tenue aux vibrations.

La partie médiane 17 des conduits 13 est représentée en coupe transversale sur la figure 4. La partie médiane 17 présente une section interne S de forme elliptique. La section interne S est la section de la lumière intérieure du conduit 13, dans un plan de section orthogonal à une direction d'étendue locale du conduit 13.

La section interne S de forme elliptique confère au conduit 13 une section fluidique efficace supérieure comparée à une section rectangulaire, pour une aire constante de la section interne.

La partie médiane 17 du conduit 13 comprend des raccordées à la plaque de support 23, lesdites parois présentant une section externe S' sensiblement elliptique. La plaque de support 23 est notamment venue de matière avec les parois du conduit 13.

La section interne S et la section externe S' sont centrées sur le plan médian P, qui est un plan de symétrie pour elles.

La section interne S présente une longueur de petit axe L1, mesurée perpendiculairement au plan médian P, comprise entre 2 mm et 5 mm, et une longueur de grand axe L2, mesurée dans le plan médian P, comprise entre 4 mm et 7 mm.

La plaque de support 23 présente une épaisseur E, mesurée perpendiculairement au plan médian P, comprise entre 1 mm et 2 mm.

Les parois du conduit 13 présentent une épaisseur E', mesurée perpendiculairement au plan médian P, comprise par exemple entre 0,5 mm et 1,5 mm.

La section interne S elliptique présente au niveau de ses extrémités latérales un rayon de courbure compris entre 1 mm et 1,5 mm.

La figure 5 est une vue en coupe de la portion d'entrée 15 d'un des conduits 13, dans le premier plan d'interface P1.

Comme représenté sur la figure 5, la portion d'entrée 15 de chaque conduit 13, tout comme la portion de sortie 19, présente une section interne S0 en goutte d'eau dans le plan d'interface P1, P2.

Par forme de goutte d'eau, il est entendu une forme composée de la superposition d'un cercle et d'un triangle dont deux côtés sont tangents au cercle, le sommet formé par lesdits deux côtés étant arrondi.

Cette section interne S0 est inscrite dans une région d'appui 31 des joints d'interface, qui présente une forme en anneau circulaire. La région d'appui 31 est destinée à recevoir un joint torique assurant l'étanchéité de l'interface entre l'ensemble de distribution 11 et le reste de la turbomachine.

Le passage d'une section interne S de forme elliptique pour la partie médiane 17 à une section S0 en goutte d'eau pour les parties d'entrée 15 et de sortie 19 permet d'éviter les pertes de charge, sans dépasser la région d'appui 31.

La figure 6 représente les portions d'encastrement 25 en coupe transversale dans un plan de coupe perpendiculaire au plan médian P.

Comme représenté, chaque portion d'encastrement 25 comprend au moins des surfaces périphériques 33 s'étendant depuis la plaque de support 23 jusqu'au plan d'interface P1, P2. Au moins une des surfaces périphériques 33 de chaque portion d'encastrement 25 forme un angle de dépouille α avec le plan d'interface P1, P2, dans le plan de section perpendiculaire audit plan d'interface P1, P2, l'angle de dépouille α compris entre 30° et 60°, par exemple sensiblement égal à 45°.

Dans l'exemple représenté, une seule des surfaces latérales 33 de chaque portion d'encastrement 25 définit un tel angle de dépouille α, les autres surface latérales 33 de chaque portion d'encastrement 25 s'étendant perpendiculairement au plan d'interface P1, P2.

Une telle valeur de l'angle de dépouille α facilite la mise en place et le centrage de l'ensemble de distribution, ainsi que son démontage et retrait, par rapport à des angles droits. Elle est de plus simple à réaliser en fabrication additive.

L'ensemble de distribution 11 peut également comprendre une ou plusieurs gorges 35 s'ouvrant chacune sur un des plans d'interface P1, P2 et circulant le long de l'ensemble de distribution, destinées à recevoir des câbles s'étendant le long de l'ensemble de distribution 11.

Le procédé de fabrication de l'ensemble de distribution suit une méthode par fabrication additive, par fusion laser sur lit de poudre métallique. Une telle méthode, connue en soit de l'état de la technique, est requise pour obtenir l'ensemble de distribution 11 décrit plus haut.

Elle est de plus fiable et rapide, en offrant un très faible taux de rejet des ensembles de distribution 11 fabriqués, et permet une réduction de la masse, de l'encombrement et du coût de fabrication dudit ensemble.

Au cours de la fabrication de l'ensemble de distribution 11, le plan médian P est orienté verticalement dans une cuve contenant la poudre métallique, de sorte que la plaque de support 23 joue un rôle de support pour les conduits 13 pendant la fabrication.

## Revendications

1. Ensemble de distribution (11) de carburant pour turbomachine, l'ensemble de distribution (11) s'étendant entre un premier plan d'interface (P1) et un deuxième plan d'interface (P2) sensiblement parallèle au premier plan d'interface (P1), l'ensemble de distribution (11) comprenant une pluralité de conduits (13) de distribution, chaque conduit (13) comprenant :
- au moins une portion d'entrée (15) débouchant dans le premier plan d'interface (P1) ou dans le deuxième plan d'interface (P2),
- au moins une portion de sortie (19) débouchant dans le premier plan d'interface (P1) ou dans le deuxième plan d'interface (P2), et
- une portion médiane (17) reliant fluidiquement chaque portion d'entrée (15) du conduit (13) et chaque portion de sortie (19) du conduit (13),
dans lequel la portion médiane (17) de chaque conduit (13) présente une section interne (S) de forme sensiblement elliptique,
**caractérisé en ce que** l'ensemble de distribution (11) comprend une plaque de support (23) reliant les portions médianes (17) des conduits (13) entre elles, la plaque de support (23) s'étendant selon un plan médian (P) sensiblement parallèle au premier plan d'interface (P1) et au deuxième plan d'interface (P2).

2. Ensemble de distribution (11) selon la revendication 1, dans lequel le plan médian (P) est équidistant du premier plan d'interface (P1) et du deuxième plan d'interface (P2).

3. Ensemble de distribution (11) selon la revendication 1 ou 2, dans lequel la plaque de support (23) présente une épaisseur (E), mesurée perpendiculairement au plan médian (P) , comprise entre 1 mm et 2 mm.

4. Ensemble de distribution (11) selon l'une des revendications 1 à 3, dans lequel l'ensemble de distribution (11) comprend au moins une nervure de rigidification (27) s'étendant sur la plaque de support (23), en saillie depuis la plaque de support (23) selon une direction perpendiculaire au plan médian (P).

5. Ensemble de distribution (11) selon l'une des revendications 1 à 4, dans lequel l'ensemble de distribution (11) comprend au moins une portion d'encastrement (25) s'étendant en saillie depuis la plaque de support (23) jusqu'au premier plan d'interface (P1), chaque portion d'encastrement (25) comprenant au moins une surface périphérique (33) formant un angle de dépouille (α) avec le premier plan d'interface (P1), dans un plan de section perpendiculaire audit premier plan d'interface (P1), l'angle de dépouille (α) étant compris entre 30° et 60°.

6. Ensemble de distribution (11) selon l'une des revendications 1 à 5, dans lequel la portion d'entrée (15) et/ou la portion de sortie (19) de chaque conduit présente une section interne (S0) présentant une forme de goutte d'eau.

7. Ensemble de distribution (11) selon l'une des revendications 1 à 6, dans lequel la pluralité de conduits (13) comprend entre huit et douze conduits.

8. Procédé de fabrication d'un ensemble de distribution (11) selon l'une des revendications 1 à 7, dans lequel l'ensemble de distribution (11) est fabriqué d'une seule pièce par une méthode de fabrication additive par fusion par laser sur un lit de poudre métallique.

## Patentansprüche

1. Kraftstoffverteileranordnung (11) für eine Turbomaschine, wobei sich die Verteileranordnung (11) zwischen einer ersten Schnittstellenebene (P1) und einer zweiten Schnittstellenebene (P2) erstreckt, die im Wesentlichen parallel zur ersten Schnittstellenebene (P1) verläuft, wobei die Verteileranordnung (11) eine Vielzahl von Verteilerleitungen (13) umfasst, wobei jede Leitung (13) umfasst:
- zumindest einen Einlassabschnitt (15), der in die erste Schnittstellenebene (P1) oder in die zweite Schnittstellenebene (P2) mündet,
- zumindest einen Auslassabschnitt (19), der in die erste Schnittstellenebene (P1) oder in die zweite Schnittstellenebene (P2) mündet, und
- einen Mittelabschnitt (17), der jeweils den Einlassabschnitt (15) der Leitung (13) und den Auslassabschnitt (19) der Leitung (13) strömungstechnisch verbindet,
wobei jeweils der Mittelabschnitt (17) der Leitung (13) einen im Wesentlichen elliptischen Innenquerschnitt (S) aufweist,
**dadurch gekennzeichnet, dass**
die Verteileranordnung (11) eine Trägerplatte (23) umfasst, die die Mittelabschnitte (17) der Leitungen (13) miteinander verbindet, wobei sich die Trägerplatte (23) entlang einer Mittelebene (P) erstreckt, die im Wesentlichen parallel zur ersten Schnittstellenebene (P1) und zur zweiten Schnittstellenebene (P2) verläuft.

2. Verteileranordnung (11) nach Anspruch 1,
wobei die Mittelebene (P) von der ersten Schnittstellenebene (P1) und der zweiten Schnittstellenebene (P2) gleich weit entfernt ist.

3. Verteileranordnung (11) nach Anspruch 1 oder 2,
wobei die Trägerplatte (23) eine senkrecht zur Mittelebene (P) gemessene Dicke (E) zwischen 1 mm und 2 mm aufweist.

4. Verteileranordnung (11) nach einem der Ansprüche 1 bis 3,
wobei die Verteileranordnung (11) zumindest eine Versteifungsrippe (27) umfasst, die sich über die Trägerplatte (23) in einer Richtung senkrecht zur Mittelebene (P) von der Trägerplatte (23) vorspringend erstreckt.

5. Verteileranordnung (11) nach einem der Ansprüche 1 bis 4, wobei die Verteileranordnung (11) zumindest einen Einbettungsabschnitt (25) umfasst, der sich von der Trägerplatte (23) bis zur ersten Schnittstellenebene (P1) vorspringend erstreckt, wobei der Einbettungsabschnitt (25) jeweils zumindest eine Umfangsfläche (33) aufweist, die in einer Schnittebene senkrecht zur ersten Schnittstellenebene (P1) einen Freiwinkel (α) mit der ersten Schnittstellenebene (P1) einschließt, wobei der Freiwinkel (α) zwischen 30° und 60° beträgt.

6. Verteileranordnung (11) nach einem der Ansprüche 1 bis 5,
wobei der Einlassabschnitt (15) und/oder der Auslassabschnitt (19) jeder Leitung einen wassertropfenförmigen Innenquerschnitt (S0) aufweist.

7. Verteileranordnung (11) nach einem der Ansprüche 1 bis 6,
wobei die Vielzahl von Leitungen (13) zwischen acht und zwölf Leitungen umfasst.

8. Verfahren zur Herstellung einer Verteileranordnung (11) nach einem der Ansprüche 1 bis 7,
wobei die Verteileranordnung (11) mit einem additiven Fertigungsverfahren durch Laserschmelzen auf einem Metallpulverbett einstückig hergestellt wird.

## Claims

1. Fuel distribution assembly (11) for a turbomachine, the distribution assembly (11) extending between a first interface plane (P1) and a second interface plane (P2) substantially parallel to the first interface plane (P1), the distribution assembly (11) comprising a plurality of distribution ducts (13), each duct (13) comprising:
- at least one inlet portion (15) that is open to the first interface plane (P1) or to the second interface plane (P2),
- at least one outlet portion (19) that is open to the first interface plane (P1) or to the second interface plane (P2), and
- a middle portion (17) fluidly connecting each inlet portion (15) of the duct (13) and each outlet portion (19) of the duct (13),
**characterized in that** the middle portion (17) of each duct (13) has an internal cross-section (S) of substantially elliptical shape,
wherein the distribution assembly (11) comprises a support plate (23) interconnecting the middle portions (17) of the ducts (13), the support plate (23) extending along a midplane (P) substantially parallel to the first interface plane (P1) and to the second interface plane (P2).

2. Distribution assembly (11) according to claim 1, wherein the midplane (P) is equidistant from the first interface plane (P1) and the second interface plane (P2).

3. Distribution assembly (11) according to claim 1 or 2, wherein the support plate (23) has a thickness (E), measured perpendicularly to the midplane (P), of between 1 mm and 2 mm.

4. Distribution assembly (11) according to one of claims 1 to 3, wherein the distribution assembly (11) comprises at least one stiffening rib (27) extending on the support plate (23), projecting from the support plate (23) in a direction perpendicular to the midplane (P).

5. Distribution assembly (11) according to one of claims 1 to 4, wherein the distribution assembly (11) comprises at least one embedding portion (25) which extends as a projection from the support plate (23) to the first interface plane (P1), each embedding portion (25) comprising at least one peripheral surface (33) forming a clearance angle (α) with the first interface plane (P1), in a section plane perpendicular to said first interface plane (P1), the clearance angle (α) being between 30° and 60°.

6. Distribution assembly (11) according to one of claims 1 to 5, wherein the inlet portion (15) and/or the outlet portion (19) of each duct has an internal cross-section (S0) in the shape of a teardrop.

7. Distribution assembly (11) according to one of claims 1 to 6, wherein the plurality of ducts (13) comprises between eight and twelve ducts.

8. Method for manufacturing a distribution assembly (11) according to one of claims 1 to 7, wherein the distribution assembly (11) is manufactured as one piece by an additive manufacturing process using laser powder bed fusion.
